# EUROPÄISCHE PATENTSCHRIFT

(11) **EP 2 354 481 B1**
(45) Veröffentlichungstag und Bekanntmachung des Hinweises auf die Patenterteilung: **29.06.2016**
(21) Anmeldenummer: 11153000.2
(22) Anmeldetag: 02.02.2011
(51) Int. Cl.: F01M 11/04, F16B 39/284, F16B 41/00

(54) **Verliersicherung**
Device preventing loss
Sécurité anti-perte

(30) Priorität: 09.02.2010 DE 102010007219; 18.02.2010 DE 102010008404
(43) Veröffentlichungstag der Anmeldung: 10.08.2011
(73) Patentinhaber: MAHLE International GmbH, 70376 Stuttgart (DE)
(72) Erfinder: Wetzel, Jörn, 70372, Stuttgart (DE)
(74) Vertreter: BRP Renaud & Partner mbB Rechtsanwälte Patentanwälte Steuerberater

(56) Entgegenhaltungen:
- EP-A1- 1 147 992
- DE-U1- 20 006 755
- DE-U1-202005 004 943

## Beschreibung

Die vorliegende Erfindung betrifft eine Verliersicherung einer Schraube in einer Einschrauböffnung. Die Erfindung betrifft außerdem eine Filtereinrichtung mit einer Wasserablassschraube, die mittels einer derartigen Verliersicherung fixiert ist.

Bei modernen Filtereinrichtungen, insbesondere bei Kraft- oder Ölfiltereinrichtungen, wird zur Erhöhung der Lebensdauer im Kraftstoff bzw. im Öl mitgeführtes Wasser abgeschieden und in separaten Wassersammelräumen gesammelt. Übersteigt ein Pegel in diesen Wassersammelräumen einen vordefinierten Grenzwert, wird das angesammelte Wasser, beispielsweise mittels einer Wasserablassschraube, abgelassen. Da derartige Filtereinrichtungen üblicherweise bei Verbrennungsmotoren in Kraftfahrzeugen angeordnet und dadurch nicht unerheblichen Erschütterungen und Vibrationen ausgesetzt sind, kommt es bei bekannten Wasserablassschrauben hin und wieder vor, dass diese sich aufgrund der Erschütterungen bzw. Vibrationen selbst lösen und dadurch ein unkontrolliertes Ablassen des abgeschiedenen Wassers erfolgt, was aus Umweltschutzgründen unbedingt zu vermeiden ist.

Aus der DE 200 06 755 U1 ist eine Verliersicherung einer Schraube bekannt, die eine mit einer Rastkontur der Schraube zusammenwirkende Gegenrastkontur aufweist.

Eine weitere Verliersicherung einer Schraube ist aus der EP 1 147 992 A1 bekannt. Bei dieser Verliersicherung wirkt eine Rastung der Verliersicherung mit einer Rastung der Schraube formschlüssig zusammen.

Die vorliegende Erfindung beschäftigt sich daher mit dem Problem, für eine Schraube in einer Einschrauböffnung eine verbesserte Verliersicherung anzugeben, die sich insbesondere durch eine kostengünstige und konstruktiv einfach ausgebildete Selbstlösesicherung auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, an einer Schraube eine Rastkontur und an einer zugehörigen Einschrauböffnung eine damit zusammenwirkende Gegenrastkontur vorzusehen, die zusammen derart ausgebildet sind, dass eine Rastwirkung bei einem mechanischen Einschrauben bzw. einem mechanischen Herausdrehen der Schraube in die Einschrauböffnung bzw. aus der Einschrauböffnung überwindbar ist, während ein ungewolltes selbsttätiges sich Lösen der Schraube aufgrund der Rastwirkung zuverlässig verhindert werden kann. Eine derartige Schraube kann beispielsweise eine Wasserablassschraube bei einer Filtereinrichtung in einem Kraftfahrzeug sein oder aber auch ein Funktionsbauteil, insbesondere ein Wasserstandssensor oder weitere separate Funktionen erfüllende Bauteile, die in Einschrauböffnungen an vibrations- bzw. erschütterungsgefährdeten Bauteilen, wie beispielsweise Verbrennungsmotoren, befestigt werden sollen. Mit dem Vorsehen einer Rast- bzw. Gegenrastkontur kann das ungewollte sich selbst Lösen der Schraube aufgrund von Vibrationen bzw. Erschütterungen zuverlässig vermieden werden, wodurch insbesondere bei einer Wasserablassschraube an einer Filtereinrichtung ein ungewolltes Kontaminieren der Umwelt zuverlässig unterbunden werden kann. Wird die erfindungsgemäße Verliersicherung zum Befestigen von beispielsweise Funktionsbauteilen verwendet, so kann deren sichere Fixierung und damit deren zuverlässige Funktion gewährleistet werden.

Erfindungsgemäß weist die Rastkontur oder die Gegenrastkontur elastische Rastnasen auf, die mit der Gegenrastkontur bzw. der Rastkontur zusammenwirken. Derartige Rastnasen der Rastkontur können beispielsweise im Gegensatz zur Gegenrastkontur aus einem weicheren Material ausgebildet sein und dadurch mechanisch abknicken bzw. abgeknickt werden, sofern diese Rastnase an einer entsprechenden Rastnase der Gegenrastkontur vorbeigeführt wird. Das elastische Ausweichen der Rastnasen, wobei zumindest eine Rastnase vorgesehen ist, gibt dem Benutzer zugleich einen haptischen Hinweis darauf, dass sich die Schraube in ihrer Einbauposition befindet. Des Weiteren ist vorgesehen, dass die Rastnasen erfindungsgemäß in axialer Richtung und in radialer Richtung von der Schraube abstehen.

Zweckmäßig ist die Rastkontur einstückig mit der Schraube und/oder die Gegenrastkontur einstückig mit der Einschrauböffnung ausgebildet. Wird beispielsweise die Schraube als Kunststoffspritzgussteil ausgebildet, so ist es in einfacher Weise möglich, daran die erfindungsgemäße Rastkontur anzuspritzen. Hierfür muss lediglich einmal die Spritzgussform abgeändert werden. Zugleich ist durch eine spezielle Ausbildung der Rastkontur bzw. der Gegenrastkontur an der Schraube auch die Verwendung von eine derartige Rastkontur nicht aufweisenden Schrauben zumindest erschwert, wodurch sichergestellt werden kann, dass ausschließlich geeignete Schrauben bzw. im übertragenen Sinne auch geeignete Einschrauböffnungen, verwendet werden. Alternativ hierzu ist selbstverständlich auch denkbar, dass die Rastkontur an einem Pin ausgebildet ist, der an einem Stirnende in die Schraube eingesteckt und anschließend mit dieser verbunden, beispielsweise verpresst, verklebt, verschweißt oder verschraubt wird. Die zweite Alternative bietet insbesondere den großen Vorteil, dass die Schraube sowohl mit als auch ohne Rastkontur verwendbar ist, wobei insbesondere auch der Austausch bzw. das Anpassen der Rastkontur durch ein einfaches Austauschen bzw. Anpassen des Pins erleichtert wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:

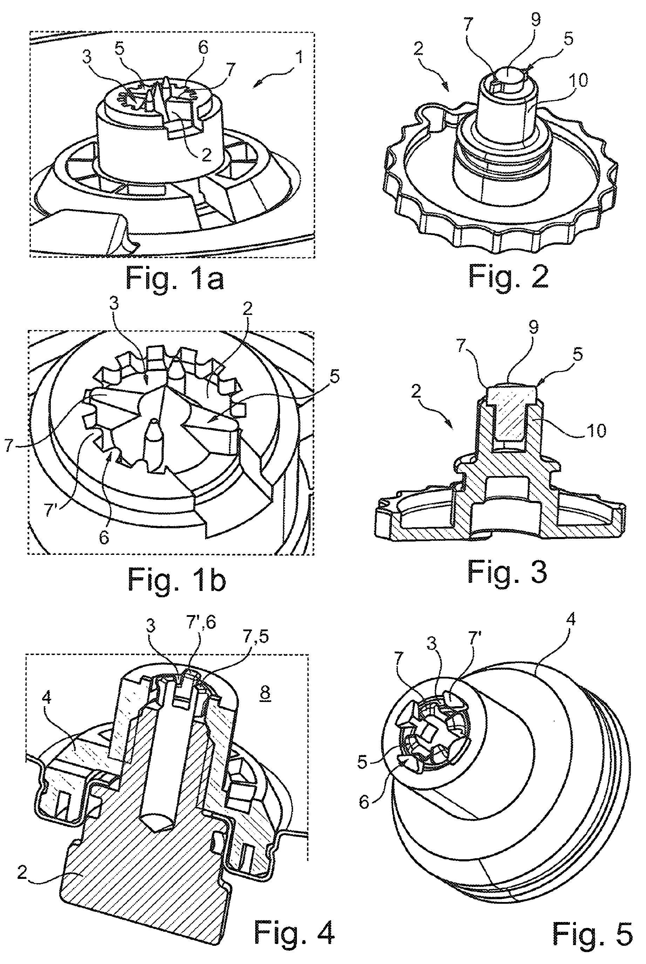

- Fig. 1 a: eine Ansicht auf eine erfindungsgemäße Verliersicherung,
- Fig. 1: b eine Draufsicht auf die Verliersicherung,
- Fig. 2: eine mögliche Ausführungsform einer erfindungsgemäßen Schraube in einer Schrägansicht,
- Fig. 3: eine Schnittdarstellung durch die Schraube gemäß der Fig. 2,
- Fig. 4: eine Schnittdarstellung durch eine weitere Ausführungsform einer Verliersicherung,
- Fig. 5: eine Ansicht auf die Verliersicherung gemäß der Fig. 4,
- Fig. 6: eine Verliersicherung mit axialen Rastkonturen,
- Fig. 7: eine Detaildarstellung einer Verliersicherung gemäß den Fig. 1 b und 1a,
- Fig. 8: eine Ansicht und eine Schnittdarstellung durch eine Verliersicherung gemäß der Fig. 6.

Entsprechend den Fig. 1a und 1b, weist eine erfindungsgemäße Verliersicherung 1 eine Schraube 2 auf, die in einer Einschrauböffnung 3 eingeschraubt ist. Die Schraube 2 kann dabei beispielsweise als Wasserablassschraube für eine Filtereinrichtung ausgebildet sein, wogegen die Einschrauböffnung 3 beispielsweise in einer entsprechenden Einpressbuchse 4 angeordnet sein kann. Selbstverständlich kann die Schraube 2 auch Bestandteil eines Funktionsbauteils, wie beispielsweise eines Wasserstandssensors sein. Betrachtet man dabei die Figuren 1 bis 3, so kann man erkennen, dass an der Schraube 2 eine Rastkontur 5 angeordnet ist, wogegen an der Einschrauböffnung 3 eine dazu komplementär ausgebildete bzw. mit der Rastkontur 5 zusammenwirkende Gegenrastkontur 6 angeordnet ist. Die Rastkontur 5 und die zugehörige Gegenrastkontur 6 sind dabei derart ausgebildet, dass bei einem mechanischen Eindrehen der Schraube 2 in die Einschrauböffnung 3 bzw. bei einem Herausdrehen der Schraube 2 aus der Einschrauböffnung 3 eine Rastwirkung überwindbar ist, während ein selbsttätiges Lösen der eingeschraubten Schraube 2 aufgrund der Rastwirkung zuverlässig verhindert werden kann. Hierdurch wird insbesondere verhindert, dass bei einer Anordnung der Schraube 2 an einem stark vibrierenden Bauteil sich die Schraube 2 ungewollt selbst löst und dadurch verloren werden kann.

Die Rastkontur 5 oder die Gegenrastkontur 6 weist dabei elastische Rastnasen 7, 7' auf, die mit der Gegenrastkontur 6 bzw. bei einer Anordnung der Rastnasen 7' an der Gegenrastkontur 6 mit der Rastkontur 5 zusammenwirken. Die elastischen Rastnasen 7 können dabei beim Einschrauben der Schraube 2 in die Einschrauböffnung 3 an der Gegenrastkontur 6 entlang geführt werden und den an der Gegenrastkontur 6 angeordneten Rastnasen 7' entsprechend ausweichen. Betrachtet man die Fig. 2 sowie 4 und 5, so kann man erkennen, dass die Rastnasen 7 erfindungsgemäß in axialer Richtung und in radialer Richtung von der Schraube 2 abstehen.

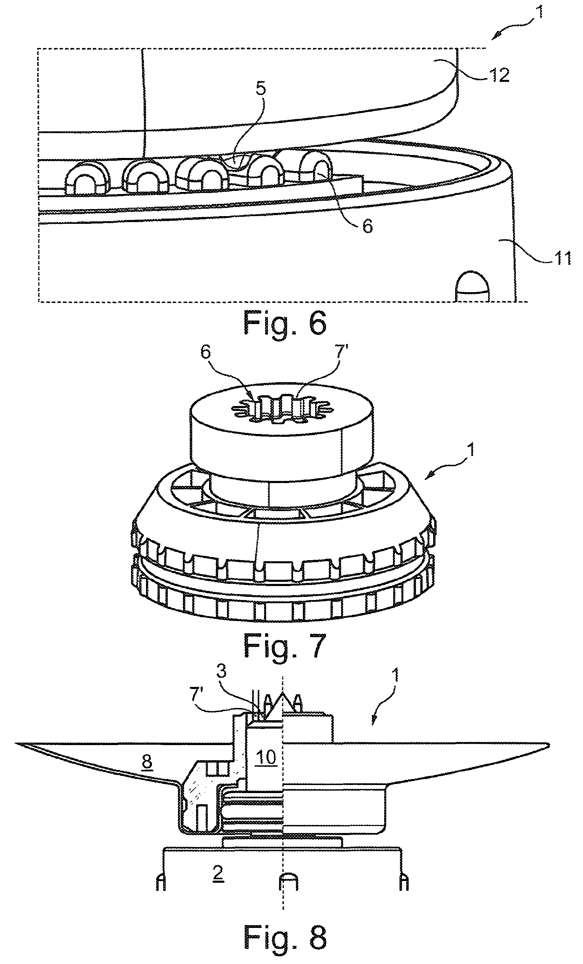

Die erfindungsgemäße Verliersicherung 1 wird beispielsweise bei einer Filtereinrichtung im Bereich eines Wassersammelraums 8 (vgl. Fig. 4) eingesetzt, wo insbesondere verhindert werden soll, dass sich die in diesem Fall als Wasserablassschraube ausgebildete Schraube 2 aus der Einschrauböffnung 3 der Einpressbuchse 4 ungewollt löst und dadurch ein ungewolltes Ablassen von Wasser in die Umgebung erfolgt. Denkbar ist aber auch eine Befestigung eines Wasserstandssensors 11 (vgl. Fig. 6) an einem Gehäuse 12 der Filtereinrichtung, wobei in diesem Fall die Rastkontur 5 am Gehäuse 12 und die Gegenrastkontur 6 am Wasserstandssensor 11 angeordnet sind. Die Rastkontur 5 und/oder die Gegenrastkontur 6 können dabei einstückig mit dem zugehörigen Bauteil, beispielsweise mit dem Gehäuse 12 ausgebildet sein oder aber lediglich mit diesem verbunden werden.

Die Rastkontur 5 an der Schraube 2 kann beispielsweise durch einen stirnseitigen die Schraube 2 eingesteckten Pin 9 gebildet werden, wobei dieser Pin 9 mit der Schraube 2 fest verbunden, insbesondere verklebt, verschraubt, verschweißt oder verpresst ist. Selbstverständlich ist auch eine einteilige Ausbildung des Pins 9 mit der Schraube 2 denkbar. Durch die separate Ausbildung der Rastkontur 5 als Pin 9, kann die Schraube 2 sowohl mit als auch ohne Pin 9 und damit sowohl mit als auch ohne Rastkontur 5 verwendet werden. Ein Gewinde zum Einschrauben der Schraube 2 in die Einschrauböffnung 3 ist dabei beispielsweise im Bereich 10 vorgesehen. Alternativ ist auch vorstellbar, dass die Rastkontur 5 einstückig mit der Schraube 2 und/oder die Gegenrastkontur 6 einstückig mit der Einschrauböffnung 3 ausgebildet sind/ist. Betrachtet man die Fig. 1 a, 1b und 7, so kann man erkennen, dass die Gegenrastkontur 6 als ein eine Innenverzahnung tragender Zahnkranz ausgebildet ist, der mit seinen Rastnasen 7' mit den Rastnasen 7 der Rastkontur 5 an der Schraube 2 zusammenwirkt.

Selbstverständlich ist auch das Anbringen einer in Axialrichtung wirksamen Rastkontur 5 bzw. Gegenrastkontur 6 denkbar, wie dies beispielsweise gemäß der Fig. 6 dargestellt ist. In diesem Fall kann beispielsweise die an der Einpressbuchse 4 angeordnete Gegenrastkontur 6 in der Art eines ringartigen Zahnkranzes ausgebildet sein, wogegen die an der Schraube 2 angeordnete Rastkontur 5 zumindest eine Rastnase 7 aufweist. Alternativ ist auch selbstverständlich die umgekehrte Anordnung vorstellbar.

Die erfindungsgemäß vorgesehene Rastkontur 5 bzw. Gegenrastkontur 6 stellt dabei üblicherweise keinen Anschlag, insbesondere keinen Axialanschlag, für eine Eindrehbewegung der Schraube 2 in die Einschrauböffnung 3 dar, sondern soll lediglich ein sich ungewolltes Lösen der Schraube 2 aus der Einschrauböffnung 3 und damit unter Umständen ein Verlieren eines Sensors bzw. eine Kontamination einer Umgebung verhindern. Die Rastkontur 5 bewirkt zusammen mit der Gegenrastkontur 6 jedoch zugleich ein haptisches Signal für das Erreichen des Einbauzustandes, da ein Zusammenwirken der Rastkontur 5 mit der Gegenrastkontur 6 üblicherweise erst kurz vor Erreichen des Einbauzustandes erfolgt.

Betrachtet man die Fig. 4 und 5, so kann erkennen, dass die Rastkontur 5 bzw. die zugehörige Gegenrastkontur 6 generell auch anders ausgebildet sein kann, so dass die in den Figuren 1-8 dargestellten Rastkonturen 5 und Gegenrastkonturen 6 lediglich beispielhaft für eine mechanische Rastverbindung stehen sollen, die ein ungewolltes sich Lösen der Schraube 2 aus der Einschrauböffnung 3 zuverlässig verhindert. Die Schraube 2 und/oder die Einpressbuchse 4 können dabei selbstverständlich aus unterschiedlichsten Materialien, wie beispielsweise Metall oder Kunststoff ausgebildet sein, wobei insbesondere bei einem Ausbilden aus Kunststoff ein einfaches Anformen, insbesondere ein Anspritzen, der Rastkontur 5 bzw. der Gegenrastkontur 6 möglich ist.

In Fig. 8 ist eine teilweise geschnittene Darstellung gezeigt, bei welcher die Schraube 2 über einen Axialanschlag an der Einpressbuchse 4 in Axialrichtung fixiert wird.

## Patentansprüche

1. Verliersicherung (1) einer Schraube (2) in einer Einschrauböffnung (3), insbesondere eine Wasserablassschraube in einer Filtereinrichtung,
- mit einer an der Schraube (2) angeordneten Rastkontur (5) und einer an der Einschrauböffnung (3) angeordneten Gegenrastkontur (6),
- wobei die Rastkontur (5) und die Gegenrastkontur (6) derart ausgebildet sind, dass eine Rastwirkung beim mechanischen Ein- bzw. Herausdrehen der Schraube (2) ein die bzw. aus der Einschrauböffnung (3) überwindbar ist, während ein selbsttätiges sich Lösen der Schraube (2) aufgrund der Rastwirkung zuverlässig verhindert wird,
- wobei die Rastkontur (5) oder die Gegenrastkontur (6) elastische Rastnasen (7,7') aufweist, die mit der Gegenrastkontur (6) bzw. der Rastkontur (5) zusammenwirken,
**dadurch gekennzeichnet,**
**dass** die Rastnasen (7,7') in axialer und radialer Richtung von der Schraube (2) abstehen.

2. Verliersicherung nach Anspruch 1,
**dadurch gekennzeichnet,**
- **dass** die Einschrauböffnung (3) in einer Filtereinrichtung vorgesehen ist,
- **dass** die Schraube (2) als Wasserablassschraube oder als Bestandteil eines Funktionsbauteils, insbesondere eines Wasserstandssensors (11) ausgebildet ist.

3. Verliersicherung nach Anspruch 1 oder 2,
**dadurch gekennzeichnet,**
**dass** die Rastkontur (5) an der Schraube (2) durch einen stirnseitig in die Schraube (2) einsteckbaren Pin (9) gebildet ist.

4. Verliersicherung nach Anspruch 3,
**dadurch gekennzeichnet,**
**dass** der Pin (9) mit der Schraube (2) verpresst, verschraubt, verschweißt, verklebt oder einteilig mit dieser ausgebildet ist.

5. Verliersicherung nach einem der Ansprüche 1 bis 4,
**dadurch gekennzeichnet,**
- **dass** die Rastkontur (5) einstückig mit der Schraube (2) und/oder die Gegenrastkontur (6) einstückig mit der Einschrauböffnung (3) ausgebildet sind, oder
- **dass** die Rastkontur (5) einstückig mit einem Gehäuse (12) und/oder die Gegenrastkontur (6) einstückig mit einem Wasserstandssensor (11) ausgebildet sind.

6. Verliersicherung nach einem der Ansprüche 1 bis 5,
**dadurch gekennzeichnet,**
**dass** die Gegenrastkontur (6) als ein eine Innenverzahnung tragender Zahnkranz ausgebildet ist.

7. Filtereinrichtung mit einer Wasserablassschraube, die mittels einer Verliersicherung (1) nach einem der Ansprüche 1 bis 6 fixiert ist.

## Claims

1. Securing device (1) for a bolt (2) in a threaded hole (3), in particular a drain plug in a filter unit,
- having a latch contour (5) located on the bolt (2) and a counter latch contour (6) located on the threaded hole (3),
- wherein the latch contour (5) and counter latch contour (6) are designed such that a latching action during mechanical screwing in or unscrewing of the bolt (2) into or out of the threaded hole (3) can be overcome, while an automatic loosening of the bolt (2) is reliably prevented due to the the latching action,
- wherein the latch contour (5) or the counter latch contour (6) comprises resilient latching tabs (7,7'), which engage with the counter latch contour (6) or the latch contour (5), **characterised in that** the latching tabs (7,7') protrude in the axial and radial direction of the bolt (2).

2. Securing device according to claim 1, **characterised in that**
- the threaded hole (3) is provided in a filter unit,
- the bolt (2) is designed as a drain plug or as part of a functional component, in particular of a water level sensor (11).

3. Securing device according to claim 1 or 2, **characterised in that** the latch contour (5) on the bolt (2) is formed by a plug-in pin (9) on the end face of the bolt (2).

4. Securing device according to claim 3, **characterised in that** the pin (9) is designed to be crimped, screwed, welded or glued to the bolt (2) or as a single piece therewith.

5. Securing device according to one of claims 1 or 4, **characterised in that**
- the latch contour (5) is designed as a single piece with the bolt (2) and/or the counter latch contour (6) is designed as a single piece with the threaded hole (3), or
- the latch contour (5) is designed as a single piece with a housing (12) and/or the counter latch contour (6) is designed as a single piece with a water level sensor (11).

6. Securing device according to any of claims 1 to 5, **characterised in that** the counter latch contour (6) is designed as a toothed rim with interior toothing.

7. Filter unit comprising a drain plug that is fixed by means of a securing device (1) in accordance with one of claims 1 to 6.

## Revendications

1. Sécurité antiperte (1) d'une vis (2) dans une ouverture de vissage (3), en particulier une vis de purge d'eau dans un dispositif de filtration,
- avec un contour d'encliquetage (5) agencé sur la vis (2) et un contour d'encliquetage antagoniste (6) agencé sur l'ouverture de vissage (3),
- dans laquelle le contour d'encliquetage (5) et le contour d'encliquetage antagoniste (6) sont réalisés de telle manière qu'une action d'encliquetage puisse être surmontée lors du serrage ou desserrage mécanique de la vis (2) dans ou hors de l'ouverture de vissage (3), alors qu'un détachement autonome de la vis (2) est empêché de manière fiable en raison de l'action d'encliquetage,
- dans laquelle le contour d'encliquetage (5) ou le contour d'encliquetage antagoniste (6) présente des nez d'encliquetage élastiques (7, 7') qui coagissent avec le contour d'encliquetage antagoniste (6) ou le contour d'encliquetage (5),
**caractérisée en ce que**
les nez d'encliquetage (7, 7') dépassent dans le sens axial et radial de la vis (2).

2. Sécurité antiperte selon la revendication 1,
**caractérisée en ce que**
- ouverture de vissage (3) est prévue dans un dispositif de filtration,
- la vis (2) est réalisée comme une vis de purge d'eau ou comme un élément d'un composant fonctionnel, en particulier d'un capteur de niveau d'eau (11).

3. Sécurité antiperte selon la revendication 1 ou 2,
**caractérisée en ce que**
le contour antagoniste (5) sur la vis (2) est formé par une broche (9) enfichable côté avant dans la vis (2).

4. Sécurité antiperte selon la revendication 3,
**caractérisée en ce que**
la broche (9) est pressée, vissée, soudée, collée à la vis (2) ou est réalisée d'un seul tenant avec celle-ci.

5. Sécurité antiperte selon l'une quelconque des revendications 1 à 4,
**caractérisée en ce que**
- le contour d'encliquetage (5) est réalisé d'un seul tenant avec la vis (2) et/ou le contour d'encliquetage antagoniste (6) est réalisé d'un seul tenant avec l'ouverture de vissage (3) ou
- le contour d'encliquetage (5) est réalisé d'un seul tenant avec un boîtier (12) et/ou le contour d'encliquetage antagoniste (6) est réalisé d'un seul tenant avec un capteur de niveau d'eau (11).

6. Sécurité antiperte selon l'une quelconque des revendications 1 à 5,
**caractérisée en ce que**
le contour d'encliquetage antagoniste (6) est réalisé comme une couronne dentée portant une denture intérieure.

7. Dispositif de filtration avec une vis de purge d'eau qui est fixée à l'aide d'une sécurité antiperte (1) selon l'une quelconque des revendications 1 à 6.
